# EUROPÄISCHE PATENTSCHRIFT

(11) **EP 3 276 197 B1**
(45) Veröffentlichungstag und Bekanntmachung des Hinweises auf die Patenterteilung: **06.05.2020**
(21) Anmeldenummer: 17181371.0
(22) Anmeldetag: 14.07.2017
(51) Int. Cl.: F16C 35/07

(54) **LAGERSICHERUNGSVORRICHTUNG FÜR EIN EINE WELLE DREHBAR LAGERNDES LAGER**
POSITION SECURING DEVICE FOR A ROTATABLE BEARING FOR A SHAFT
DISPOSITIF DE FIXATION DE PALIER POUR UN PALIER MONTÉ EN ROTATION SUR UN ARBRE

(30) Priorität: 26.07.2016 DE 102016213719
(43) Veröffentlichungstag der Anmeldung: 31.01.2018
(73) Patentinhaber: ZF Friedrichshafen AG, 88046 Friedrichshafen (DE)
(72) Erfinder: Lieder, Sergej, 34123 Kassel (DE); Kühne, Martin, 34479 Breuna (DE)
(74) Vertreter: ZF Friedrichshafen AG

(56) Entgegenhaltungen:
- EP-A1- 0 906 216
- DE-A1- 2 424 262
- JP-A- 2014 015 999
- US-A- 3 966 282

## Beschreibung

Die Erfindung betrifft eine Lagersicherungsvorrichtung für eine drehbar gelagerte Hubschrauberrotorwelle. Die Erfindung betrifft zudem eine drehbar gelagerte Hubschrauberrotorwelle mit einer Lagersicherungsvorrichtung. Die Erfindung betrifft zudem ein Verfahren zur Sicherung eines Lagers einer Welle.

Ein Hubschrauberhauptgetriebe besteht üblicherweise aus mindestens einer Antriebswelle, Heckrotorabtriebswelle und mindestens einem Rotormast. Gewisse Hubschrauber haben keine gelenkig gelagerten Rotorblätter, so dass Kräfte wie beispielsweise Biegung, Zug und Scherung und Vibrationen der Rotorblätter unmittelbar in den Rotormast eingeleitet werden. Die dabei entstehenden Belastungen werden durch ein oder mehrere Lager des Rotormasts aufgenommen. Aufgrund der hohen Belastungen bei derartigen Hubschraubern werden Rotormasten zudem leicht ausbaubar ausgelegt.

Ein solches Lager, das beispielsweise einen Innenring und einen Außenring umfassen kann, muss axial gesichert werden. Dabei kommen insbesondere in der Luftfahrt regelmäßig zwei konstruktive Methoden in Betracht. Nach einer ersten Methode wird der Rotormast üblicherweise lediglich durch eine unterhalb eines unteren Lagers befindliche Mastmutter gesichert und kann nach Lösen der Mastmutter nach oben aus einem den Rotormast aufnehmenden und insbesondere ein oberes Lager abstützenden Lagerkranz herausgezogen werden, um den Rotormast im Rahmen von Wartungsarbeiten auf Defekte zu inspizieren. Der grundsätzliche Aufbau des Rotormasts ist beispielsweise in der DE 199 44 412 C2 beschrieben. Durch diese Methode wird eine Fixierung eines einzelnen Innenrings durch die Mastmutter beziehungsweise Wellenmutter erreicht. Nachteilig daran ist, dass das Gewinde eine erhebliche Kerbwirkung erzeugt, was sich negativ auf die Tragfähigkeit der Bauelemente auswirkt. Der Rotormast muss in einem solchen Fall verstärkt ausgeführt werden und wird dadurch schwerer.

Aus der DE 24 24 262 A1 ist eine gewindelose Spannvorrichtung zum Festklemmen eines Lagers auf einer Welle bekannt, wobei die übliche Gewindeklemmutter auf dem Umfang der Welle nicht erforderlich ist. Entsprechend der Offenbarung ist ein geteilter Ring mit einer kegelförmigen inneren Fläche vorgesehen, welcher auf der Welle zusammengebaut ist und mit seinem inneren Umfang in einer kegelförmigen Ringkerbe an der Außenfläche der Welle liegt.

Eine zweite Methode sieht vor, zwischen einem unteren und einem oberen Lager ein Distanzrohr anzuordnen. So ist aus der DE 10 2012 203 178 eine Kraftübertragungseinrichtung bekannt, bei welcher zwischen dem unteren und dem oberen Wälzlager ein Distanzrohr angeordnet ist, welches einen ersten und einen zweiten Längenabschnitt aufweist, wobei der zweite Längenabschnitt gegenüber dem ersten Längenabschnitt eine erhöhte Biegeelastizität aufweist. Das Distanzrohr dieser Kraftübertragungseinrichtung zeichnet sich allerdings durch einen hohen Fertigungsaufwand aus.

Aus der DE 10 2014 216 695 A1 ist ein Distanzrohr für eine Kraftübertragungseinrichtung eines Drehflügelflugzeugs bekannt, welches eine mäandrierende Querschnittsgestalt und mehrere miteinander verbundene gerade Kegelstumpfringsegmente mit einer Grundfläche und einer Deckfläche aufweist.

Der Nachteil der zweiten Methode ist, dass das Distanzstück beziehungsweise Distanzrohr oder Distanzbuchse zum Verschleiß neigt, was einen Verlust an Vorspannung hervorruft und möglicherweise zu einem Schaden am Getriebe führen kann.

Aufgabe der vorliegenden Erfindung ist es daher, eine Lagersicherungsvorrichtung für eine drehbar gelagerte Hubschrauberrotorwelle bereitzustellen, welche die Nachteile des Standes der Technik überwindet. Insbesondere ist es Aufgabe der Erfindung, eine konstruktiv einfache und kostengünstige Lagersicherungsvorrichtung bereitzustellen. Ein weiterer Aspekt dieser Erfindung ist es, eine Hubschrauberrotorwelle mit einer solchen Lagervorrichtung bereitzustellen. Ein weiterer Aspekt dieser Erfindung ist es, ein Verfahren zur Sicherung eines Lagers einer Welle bereitzustellen.

Der erste Aspekt der Erfindung wird durch die Merkmale des Anspruchs 1 gelöst. Vorteilhafte Ausgestaltungen ergeben sich aus den Unteransprüchen.

Die Lagersicherungsvorrichtung umfasst eine die Welle umlaufende Nut. Ferner umfasst sie zwei in die Nut formschlüssig eingreifende und zu der Welle koaxial angeordnete C-Ringe mit einer sich in axialer Richtung eines zu sichernden Lagers erstreckende Aufnahmefläche.

Ferner umfasst sie einen zur Welle koaxial angeordneten Gewindering mit über dessen Umfang verteilt angeordneten Bohrungen, wobei der Gewindering auf der Aufnahmefläche der beiden C-Ringe aufliegt.

Ferner ist ein Druckring vorgesehen, der zur Welle koaxial angeordnet ist und mit einem Lagerelement des zu sichernden Lagers in Kontakt bringbar ist.

Ferner sind eine Vielzahl an Kontermuttern vorgesehen, die entlang des Umfangs des Gewinderings mit dem Gewindering mittels durch die Bohrungen ragenden Schrauben verbunden sind. Die Kontermuttern sind axial zwischen dem Gewindering und dem Druckring angeordnet und stehen mit dem Druckring in Kontakt,

Dadurch sind in einem zusammengesetzten Zustand der Lagersicherungsvorrichtung die beiden C-Ringe über den Gewindering, die Kontermuttern und den Druckring mit dem Lagerelement des die Welle drehbar lagernden Lagers verbunden.
Unter einer Welle ist ein, üblicherweise aber nicht ausschließlich stabförmiges Maschinenelement zu verstehen, das ausgebildet ist, Drehbewegungen und/oder Drehmomente weiterzuleiten und/oder rotierende Teile zu lagern. Segmentförmig bedeutet insbesondere, dass ein Bauelement mehrteilig also nicht integral ausgebildet ist.

Ringförmig bedeutet insbesondere, dass ein Bauelement die Form eines Ringes aufweisen, also geschlossen sein kann. Ringförmig kann aber auch bedeuten, dass das Bauelement eine runde, kreisförmige Form aufweist, also offen ist.

Ein Bauelement ist insbesondere ein Bestandteil der Lagersicherungsvorrichtung, beispielsweise Welle, Fixiermittel, Verbindungsmittel und Abstandselemente. Es kann aber auch ein Bestandteil einer Lagerung sein, beispielsweise Innenring, Außenring, Wälzkörper.

Fixieren kann sowohl ein Festhalten einer Position oder Lage eines Bauelements als auch eine Befestigung eines Bauelements bedeuten. Axial fixiert bedeutet, dass eine Bewegung des fixierten Bauelements in axialer Richtung verhindert wird.

Als zu sicherndes Lager kann insbesondere ein Wälzlager in Betracht kommen, bei dem zwei zueinander bewegliche Bauelemente, der sogenannte Innenring sowie der Außenring, durch rollende Körper beziehungsweise Wälzkörper getrennt werden. Im Betrieb rollen diese Wälzkörper zwischen Innen- und Außenring ab. Dies geschieht auf gehärteten Stahlflächen, den sogenannten Laufbahnen. Jedoch sind auch andere Lager wie beispielsweise Gleitlager denkbar.

Ein Abstandselement ist ein Maschinenelement, das zur Welle axial beabstandet angeordnet werden kann und ausgebildet ist, zwei insbesondere zur Welle koaxial angeordnete Bauelemente voneinander zu distanzieren, insbesondere in axialer Richtung.

Zwei Bauelemente werden als verbunden bezeichnet, wenn zwischen den Bauelementen eine feste, beispielsweise auch drehfeste Verbindung besteht. Derartig verbundene Bauelemente drehen mit der gleichen Drehzahl.

Ist die Lagersicherungsvorrichtung zusammengesetzt, also bestimmungsgemäß an der Welle und Lager angebracht, so sind die zwei C-Ringe mittels des Gewinderings axial und radial an der Welle fixiert. Über die Kontermuttern kann die drehfeste Verbindung zwischen den an der Welle fixierten C-Ringe und dem Bauelement des Lagers, beispielsweise dem Innenring, hergestellt werden, sodass das Lager axial gesichert werden kann.

Es hat sich herausgestellt, dass durch die Erfindung eine konstruktiv einfache, kompakt bauende und insbesondere kostengünstige Lagersicherungsvorrichtung bereitgestellt werden kann. In vorteilhafter Weise verhindert die Erfindung die negativen Auswirkungen der Kerbwirkung bei Verwendung einer Wellenmutter als auch den möglichen verschleißbedingten Verlust der Vorspannung bei Verwendung eines Distanzrohrs zur Sicherung des Lagers.

Als Verbindungsmittel kommen Schrauben zum Einsatz. Bei den Abstandselementen handelt es sich um die vorstehend genannten Kontermuttern. Der Gewindering kann zu den stiftförmigen Verbindungsmitteln korrespondierende Ausnehmungen mit oder ohne entsprechendes Gegengewinde aufweisen.

Dadurch, dass die beiden C-Ringe formschlüssig mit der Welle verbunden sind, kann die axiale Fixierung der beiden C-Ringe mittels des Gewinderings verstärkt werden.

Besonders bevorzugt ist es, wenn der Formschluss dadurch herstellbar ist, dass die zwei C-Ringe im Querschnitt ein T-Profil mit einem sich nach radial innen erstreckenden Schenkel aufweist und die Welle eine zu dem Schenkel korrespondierende umlaufende Nut aufweist. Ein solcher Formschluss erhöht nicht nur die axiale Fixierung, sondern verringert auch die Montagezeit, also die Zeit, derer es bedarf, die Lagersicherungsvorrichtung mit der Welle und dem Lager zusammenzusetzen, weil unmittelbar erkennbar ist, an welcher Stelle der Welle die zwei C-Ringe eingesetzt werden müssen. Der axiale Abstand der Nut zum Lager, beispielsweise zum Innenring, entspricht insbesondere ungefähr der Summe aus einer axial maximalen Erstreckung des Gewinderings und einer maximalen axialen Erstreckung der Kontermuttern.

Darüber hinaus ist es bevorzugt, wenn die zwei C-Ringe Ausnehmungen zur Aufnahme der Schrauben aufweisen. Diese Ausnehmungen können beispielsweise in dem sich radial nach außen erstreckenden Schenkel des T-Profils angeordnet sein, wobei die Ausnehmungen bevorzugt halbkreisförmig ausgebildet sind. Jedoch ist es auch denkbar, Bohrungen vorzusehen. Durch die Ausnehmungen wird insbesondere das Einführen des Verbindungsmittels in die Ausnehmung des Gewinderings erleichtert.

Es hat sich herausgestellt, dass bei zwei C-Ringen sowohl die Handhabbarkeit als auch die Stabilität, im Vergleich zu einem Fixiermittel mit drei oder vier Segmenten, optimal ist. Mittels des Druckrings lassen sich die axialen Kräfte optimal über den Umfang verteilen.

Ein weiterer Aspekt der Erfindung ist es, eine drehbar gelagerte Hubschrauberrotorwelle bereitzustellen, wobei das Lager der Welle durch eine Lagersicherungsvorrichtung mit den oben beschriebenen Merkmalen axial gesichert ist.

Ein noch weiterer Aspekt der Erfindung ist es, ein Verfahren zur Sicherung eines Lagers einer Welle bereitzustellen, das Verfahren umfassend die Schritte: Aufschieben eines Druckrings auf die Welle und Anlegen an einen Innenring des Lagers in einem fünften Schritt zu einem fünften Zeitpunkt t5;
Aufschieben eines Gewinderings auf Welle in einem ersten Schritt zu einem ersten Zeitpunkt t1;
Aufstecken zweier C-Ringe in eine die Welle umlaufende Nut in einem zweiten Schritt zu einem zweiten Zeitpunkt t2;
axiales Zurücksetzen des Gewinderings, sodass der Gewindering zumindest teilweise auf einer sich axial erstreckenden Aufnahmefläche der zwei C-Ringe aufliegt in einem dritten Schritt zu einem dritten Zeitpunkt t3;
Verbinden des Gewinderings (8) mit Kontermuttern (7) mittels Schrauben (10) in einem vierten Schritt zu einem vierten Zeitpunkt t4, sodass
die C-Ringe über den Gewindering, die Kontermuttern und den Druckring mit einem Innenring des die Welle drehbar lagernden Lagers drehfest verbunden werden, wobei t5<t1<t2<t3<t4 ist.

Es hat sich herausgestellt, dass durch das erfindungsgemäße Verfahren ein konstruktiv einfaches, kompakt bauendes und kostengünstiges Verfahren zur axialen Sicherung eines Lagers an einer Welle bereitgestellt werden kann.

Mittels des Druckrings können die axialen Kräfte in Umfangsrichtung besser verteilt werden.

Die Erfindung wird anhand der nachfolgend aufgeführten Figuren näher erläutert.

Es zeigen
- Fig. 1: eine erste Ausführungsform der Erfindung in einer Explosionsdarstellung;
- Fig. 2: eine erste Ausführungsform des erfindungsgemäßen Verfahrens und
- Fig. 3: die Erfindung gemäß Fig. 1 in einem zusammengesetzten Zustand.

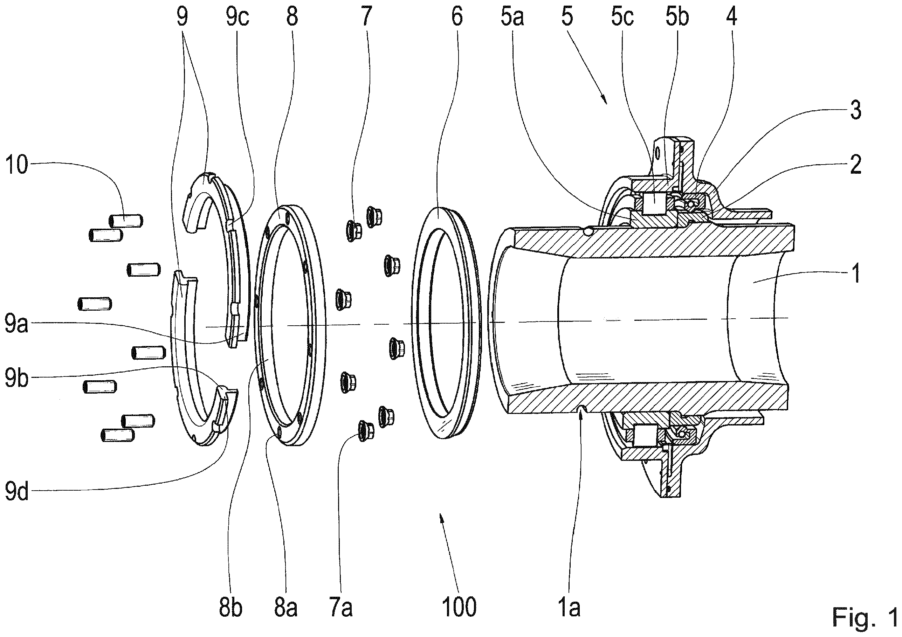

Im rechten Teil der Fig. 1 ist eine als Hauptrotorwelle eines Hubschraubers ausgebildete Welle 1 dargestellt, die an einem als Wälzlager ausgebildeten oberen Rotormastlager 5 drehbar gelagert ist. Das Lager 5 umfasst einen Innenring 5a, einen Außenring 5a und einen Wälzkörperkäfig mit Wälzkörpern 5c, der radial zwischen Innen- und Außenring angeordnet ist. Der Außenring 5b ist mit einem Dichtungsträger 3 gehäusefest montierbar. Radial zwischen der Welle 1 und dem Dichtungsträger 3 sind ein Laufring 2 und ein Wellendichtring 4 angeordnet, wobei der Laufring 2 mit der Welle 1 mitdreht.

Zu erkennen ist, dass das Lager 5 durch ein Zusammenwirken der Elemente Dichtungsträger 3, Wellendichtring 4 und Laufring 2 mit der Welle 1 nach axial rechts fixiert ist und dass der Innenring, der sich gegenüber der Lastrichtung dreht, nicht wie üblich mit einer Presspassung an der Welle 1 montiert ist.

Eine erste bevorzugte Ausführung der erfindungsgemäßen Lagersicherungsvorrichtung umfasst ein erstes Fixiermittel 9, das zwei C-Ringe umfasst, ein als Gewindering ausgebildetes zweites Fixiermittel 8, ein als Druckring ausgebildetes drittes Fixiermittel 6 und acht als Kontermuttern ausgebildete Abstandselemente 7, die mit acht als Stiftschrauben ausgebildeten Verbindungsmitteln 10 mit dem Gewindering 8 verbunden werden können. Die Kontermuttern 7 sind derart dimensioniert, dass sie in axialer Richtung zwischen Gewindering 8 und Druckring 6 einen mechanischen Kontakt herstellen können. Eine andere Anzahl, beispielsweise vier, fünf, sechs, sieben, neun, zehn, etc. Stiftschrauben sind ebenfalls denkbar.

Der Gewindering 8 umfasst acht Gewindebohrungen 8a, die gleichmäßig in Umfangsrichtung angeordnet sind und zu den Stiftschrauben 10 korrespondieren, das heißt ein entsprechendes Gegengewinde aufweisen.

Im Querschnitt weisen die zwei C-Ringe ein T-Profil mit einem sich nach radial innen erstreckenden Schenkel 9b und einem sich nach radial außen erstreckenden Schenkel 9e auf. Der Schenkel 9b ist ausgebildet, in eine die Welle 1 umlaufende Nut 1a einzugreifen. Entlang des Umfangs der zwei C-Ringe 9 sind am Schenkel 9e acht als halboffene Bohrungen ausgebildete dritte Ausnehmungen 9c vorgesehen, die zu den acht Gewindebohrungen 8a korrespondieren.

Gut zu erkennen ist, dass das T-Profil im Querschnitt nicht symmetrisch ist. So weist der nach radial innen ragende Schenkel 9b einen ungefähr halbrunden Schluss auf. Der nach radial außen ragende Schenkel 9d weist einen kantigen Schluss auf. Dadurch kann der Gewindering 8 in axialer Richtung optimal abgestützt werden.

Das T-Profil der C-Ringe 9 bildet eine nach radial außen gerichtete Aufnahmefläche 9a. Diese ist ausgebildet, den Gewindering 8 zumindest teilweise aufzunehmen, so dass eine Innenfläche 8b des Gewinderings 8 auf der Aufnahmefläche 9d aufliegen kann und die C-Ringe radial fixiert werden können.

Der Druckring 6 ist ausgebildet, über die Kontermuttern 7 leitbare Kräfte in Umfangsrichtung gleichmäßig aufzunehmen.

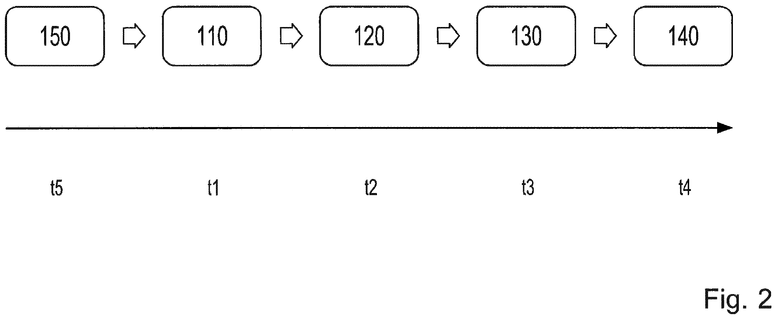

Fig. 2 zeigt eine bevorzugte Ausführungsform des erfindungsgemäßen Verfahrens. Um das Lager 5 der Fig. 1 nach axial links zu fixieren, kann gemäß der bevorzugten Ausführungsform des erfindungsgemäßen Verfahrens gemäß Fig. 2 wie folgt vorgegangen werden:
Zunächst wird in einem fünften Schritt 150 zum Zeitpunkt t₅ der Druckring 8 auf die Welle aufgesetzt und bis zum Anliegen an dem Innenring 5a des Lagers 5 geschoben.

In einem zeitlich anschließenden ersten Schritt 110 zum Zeitpunkt t1 wird der Gewindering 8 auf die Welle 1 aufgeschoben, so dass er axial zwischen der Nut 1a und dem Druckring 6 liegt.

In einem zeitlich anschließenden zweiten Schritt 120 zum Zeitpunkt t2 werden die zwei C-Ringe 9 radial zur Welle 1 aufgesetzt beziehungsweise aufgesteckt, so dass der Schenkel 9b in die Nut 1a eingreift.

In einem zeitlich anschließenden dritten Schritt 130 zum Zeitpunkt t3 wird der Gewindering 8 axial zurückgesetzt beziehungsweise zurückgeschoben, so dass der Gewindering 8 mit seiner Innenfläche 8b auf der sich axial erstreckenden Aufnahmefläche 9a der C-Ringe 9 zum Aufliegen kommt und damit die C-Ringe 9 an der Welle festlegt.

In einem zeitlich anschließenden vierten Schritt 140 zum Zeitpunkt t4 werden die Kontermuttern 7 axial zwischen dem Gewindering 8 und dem Druckring 6 gehalten, so dass sie in Deckung mit den Bohrungen sind und mit Stiftschrauben 10 an dem Gewindering 8 festgeschraubt. Hierbei können zunächst die Schrauben und dann die Kontermuttern kreuzweise mit einem definierten Anzugsmoment angezogen werden.

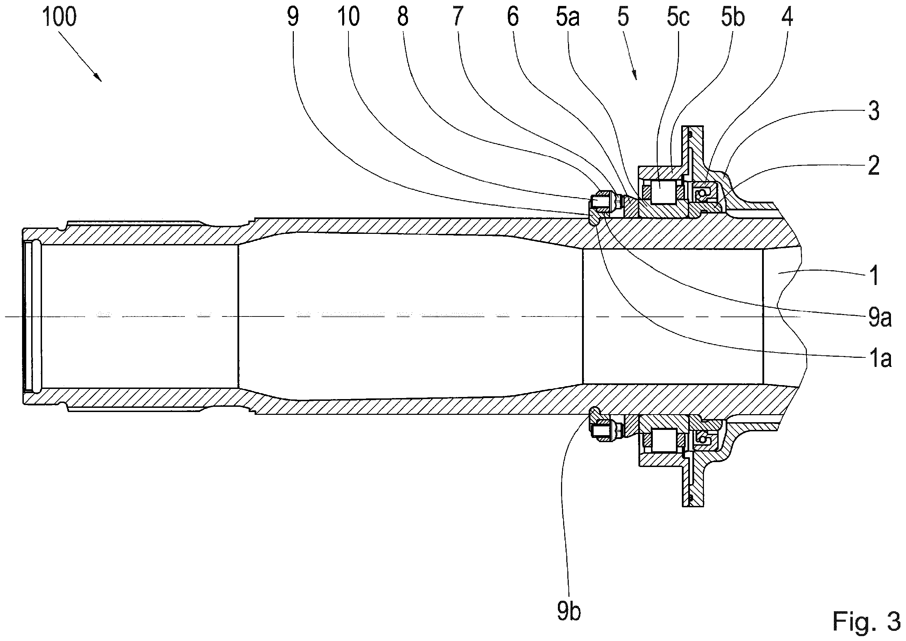

Fig. 3 zeigt die bevorzugte Ausführungsform der Fig. 1 in einem zusammengesetzten, das heißt montierten Zustand.

### Bezugszeichen

- 1: Welle
- 2: Laufring
- 3: Dichtungsträger
- 4: Wellendichtring
- 5: Lager, Wälzlager
- 5a: Innenring
- 5b: Außenring
- 5c: Wälzkörperkäfig mit Wälzkörpern
- 6: drittes Fixiermittel, Druckring
- 7: Abstandselemente, Kontermutter
- 7a: zweite Ausnehmung, Bohrung
- 8: zweites Fixiermittel, Gewindering
- 8a: erste Ausnehmung, Bohrung
- 8b: Innenfläche
- 9: erstes Fixiermittel, C-Ring (C-Ringe)
- 9a: Aufnahmefläche
- 9b: Schenkel nach radial innen
- 9c: Ausnehmung, halboffene Bohrung
- 9d: Schenkel nach radial außen
- 10: Verbindungsmittel, Stiftschrauben

## Patentansprüche

1. Lagersicherungsvorrichtung für eine drehbar gelagerte Hubschrauberrotorwelle (1), die Lagersicherungsvorrichtung umfassend:
- eine die Welle (1) umlaufende Nut (1a),
- zwei in die Nut (1a) formschlüssig eingreifende und zu der Welle (1) koaxial angeordnete C-Ringe (9) mit einer sich in axialer Richtung eines zu sichernden Lagers erstreckende Aufnahmefläche (9a),
- einen zur Welle (1) koaxial angeordneten Gewindering (8) mit über dessen Umfang verteilt angeordneten Bohrungen (8a), wobei der Gewindering (8) auf der Aufnahmefläche (9a) der beiden C-Ringe (9) aufliegt,
- einen zur Welle (1) koaxial angeordnete und mit einem Lagerelement (5a) des zu sichernden Lagers (5) in Kontakt bringbaren Druckring (6),
- eine Vielzahl an Kontermuttern (7), die entlang des Umfangs des Gewinderings (8) mit dem Gewindering (8) mittels durch die Bohrungen (8a) ragenden Schrauben (10) verbunden sind und axial zwischen dem Gewindering (8) und Druckring (6) angeordnet sind und mit dem Druckring (6) in Kontakt stehen, sodass in einem zusammengesetzten Zustand der Lagersicherungsvorrichtung die beiden C-Ringe (9) über den Gewindering (8), die Kontermuttern (7) und den Druckring (6) mit dem Lagerelement (5a) des die Welle (1) drehbar lagernden Lagers (5) verbunden sind.

2. Lagersicherungsvorrichtung nach Anspruch 1, wobei die beiden C-Ringe (9) Ausnehmungen (9c) zur Aufnahme der Schrauben (10) aufweisen.

3. Lagersicherungsvorrichtung nach Anspruch 1 oder 2, wobei die beiden C-Ringe (9) im Querschnitt ein T-Profil aufweisen, wobei ein Schenkel (9b) des T-Profils in die Nut (1a) eingreift und der sich senkrecht zum Schenkel erstreckende Abschnitt die Aufnahmefläche (9a) der C-Ringe (9) bildet.

4. Hubschrauberrotorwelle (1), die mittels eines Lagers drehbar gelagert ist, **gekennzeichnet durch** eine Lagersicherungsvorrichtung nach einem der Ansprüche 1 bis 3.

5. Verfahren zur Sicherung eines Lagers (5) einer Welle (1), umfassend die Schritte:
- Aufschieben eines Druckrings (6) auf die Welle (1) und Anlegen an einen Innenring (5a) des Lagers (5) in einem fünften Schritt (150) zu einem fünften Zeitpunkt t5;
- Aufschieben eines Gewinderings (8) auf Welle (1) in einem ersten Schritt (110) zu einem ersten Zeitpunkt t1;
- Aufstecken zweier C-Ringe (9) in eine die Welle (1) umlaufende Nut (1a) in einem zweiten Schritt (120) zu einem zweiten Zeitpunkt t2;
- axiales Zurücksetzen des Gewinderings (8), sodass der Gewindering (8) zumindest teilweise auf einer sich axial erstreckenden Aufnahmefläche (9a) der zwei C-Ringe (9) aufliegt in einem dritten Schritt (130) zu einem dritten Zeitpunkt t3;
- Verbinden des Gewinderings (8) mit Kontermuttern (7) mittels Schrauben (10) in einem vierten Schritt (140) zu einem vierten Zeitpunkt t4, sodass die C-Ringe (9) über den Gewindering (8), die Kontermuttern (7) und den Druckring (6) mit einem Innenring (5a) des die Welle (1) drehbar lagernden Lagers (5) drehfest verbunden werden,
- wobei t5<t1<t2<t3<t4 ist.

## Claims

1. Bearing securing device for a rotatably mounted helicopter rotor shaft (1), the bearing securing device comprising:
- a groove (1a) encircling the shaft (1),
- two C rings (9) which engage in a form-fitting manner in the groove (1a) and are arranged coaxially with respect to the shaft (1) and have a receiving surface (9a) extending in the axial direction of a bearing to be secured,
- a threaded ring (8) which is arranged coaxially with respect to the shaft (1) with bores (8a) arranged over the circumference of said threaded ring, wherein the threaded ring (8) rests on the receiving surface (9a) of the two C rings (9),
- a pressure ring (6) which is arranged coaxially with respect to the shaft (1) and can be brought into contact with a bearing element (5a) of the bearing (5) to be secured,
- a multiplicity of lock nuts (7) which are connected to the threaded ring (8) along the circumference of the threaded ring (8) by means of screws (10) protruding through the bores (8a) and are arranged axially between the threaded ring (8) and pressure ring (6) and are in contact with the pressure ring (6) such that, in an assembled state of the bearing securing device, the two C rings (9) are connected via the threaded ring (8), the lock nuts (7) and the pressure ring (6) to the bearing element (5a) of the bearing (5) which rotatably supports the shaft (1).

2. Bearing securing device according to Claim 1, wherein the two C rings (9) have recesses (9c) for receiving the screws (10).

3. Bearing securing device according to Claim 1 or 2, wherein the two C rings (9) have a T profile in cross section, wherein one limb (9b) of the T profile engages in the groove (1a) and the portion extending perpendicularly to the limb forms the receiving surface (9a) of the C rings (9).

4. Helicopter rotor shaft (1) which is mounted rotatably by means of a bearing, **characterized by** a bearing securing device according to one of Claims 1 to 3.

5. Method for securing a bearing (5) of a shaft (1), comprising the steps of:
- pushing a pressure ring (6) onto the shaft (1) and placing it against an inner ring (5a) of the bearing (5) in a fifth step (150) at a fifth time t5;
- pushing a threaded ring (8) onto the shaft (1) in a first step (110) at a first time t1;
- plugging two C rings (9) into a groove (1a) encircling the shaft (1) in a second step (120) at a second time t2;
- axially resetting the threaded ring (8) such that the threaded ring (8) at least partially rests on an axially extending receiving surface (9a) of the two C rings (9) in a third step (130) at a third time t3;
- connecting the threaded ring (8) to lock nuts (7) by means of screws (10) in a fourth step (140) at a fourth time t4 such that the C rings (9) are connected via the threaded ring (8), the lock nuts (7) and the pressure ring (6) for conjoint rotation to an inner ring (5a) of the bearing (5) which rotatably supports the shaft (1),
- wherein t5<t1<t2<t3<t4.

## Revendications

1. Dispositif de fixation de palier pour un arbre de rotor d'hélicoptère (1) supporté de manière rotative, le dispositif de fixation de palier comprenant :
- une rainure (1a) entourant l'arbre (1),
- deux colliers en C (9) s'engageant par correspondance de formes dans la rainure (1a) et disposés coaxialement par rapport à l'arbre (1), avec une surface de réception (9a) s'étendant dans la direction axiale d'un palier à fixer,
- une bague filetée (8) disposée coaxialement par rapport à l'arbre (1), avec des alésages (8a) disposés de manière répartie sur sa périphérie, la bague filetée (8) reposant sur la surface de réception (9a) des deux colliers en C (9),
- une bague de pression (6) disposée coaxialement par rapport à l'arbre (1) et pouvant être amenée en contact avec un élément de palier (5a) du palier (5) à fixer,
- une pluralité de contre-écrous (7) qui sont connectés le long de la périphérie de la bague filetée (8) à la bague filetée (8) au moyen de vis (10) faisant saillie à travers les alésages (8a) et qui sont disposés axialement entre la bague filetée (8) et la bague de pression (6) et qui sont en contact avec la bague de pression (6) de telle sorte que dans un état assemblé du dispositif de fixation de palier, les deux colliers en C (9) soient connectés par le biais de la bague filetée (8), des contre-écrou (7) et de la bague de pression (6) à l'élément de palier (5a) du palier (5) supportant l'arbre (1) de manière rotative.

2. Dispositif de fixation de palier selon la revendication 1, dans lequel les deux colliers en C (9) présentent des évidements (9c) pour recevoir les vis (10).

3. Dispositif de fixation de palier selon la revendication 1 ou 2, dans lequel les deux colliers en C (9) présentent, en section transversale, un profil en T, une branche (9b) du profil en T venant en prise dans la rainure (1a) et la portion s'étendant perpendiculairement à la branche formant la surface de réception (9a) des colliers en C (9).

4. Arbre de rotor d'hélicoptère (1), qui est supporté de manière rotative au moyen d'un palier, **caractérisé par** un dispositif de fixation de palier selon l'une quelconque des revendications 1 à 3.

5. Procédé de fixation d'un palier (5) d'un arbre (1), comprenant les étapes suivantes :
- enfoncement d'une bague de pression (6) sur l'arbre (1) et application contre une bague intérieure (5a) du palier (5) dans une cinquième étape (150) à un cinquième instant t5 ;
- enfoncement d'une bague filetée (8) sur l'arbre (1) dans une première étape (110) à un premier instant t1 ;
- enfichage de deux colliers en C (9) dans une rainure (1a) entourant l'arbre (1) dans une deuxième étape (120) à un deuxième instant t2 ;
- recul axial de la bague filetée (8) de telle sorte que la bague filetée (8) repose au moins en partie sur une surface de réception (9a), s'étendant axialement, des deux colliers en C (9) dans une troisième étape (130) à un troisième instant t3 ;
- connexion de la bague filetée (8) à des contre-écrous (7) au moyen de vis (10) dans une quatrième étape (140) à un quatrième instant t4, de telle sorte que les colliers en C (9) soient connectés de manière solidaire en rotation par le biais de la bague filetée (8), des contre-écrous (7) et de la bague de pression (6) à une bague intérieure (5a) du palier (5) supportant l'arbre (1) de manière rotative,
- où t5<t1<t2<t3<t4.
